# EUROPEAN PATENT APPLICATION

(11) **EP 2 837 452 A1**
(43) Date of publication of application: **18.02.2015**
(21) Application number: 14380021.7
(22) Date of filing: 29.07.2014
(51) Int. Cl.: B23B 49/02

(54) **Drill positioner**

(30) Priority: 02.08.2013 ES 201300726
(71) Applicant: Toledo Garcia, Miguel Angel, 28905 Getafe (Madrid) (ES)
(72) Inventor: Toledo Garcia, Miguel Angel, 28905 Getafe (Madrid) (ES)

(57) **Abstract**

The Drill Positioner is a mechanism that allows perpendicular drilling of the piece on which it is fixed.

The Drill Positioner incorporates a mechanism that allows drilling correction based on the type of surface on which the drilling jig is lying. The coupling mechanism is carried on a jack (7) with a double hand crank system (6). In one of the two hand cranks (6) is placed the bush (9) which is the piece where the drilling jig coupling tool is held.

## Description

### SUBJECT AND AIM OF THE INVENTION

The Drill Positioner is a mechanism that can be used to achieve the precision of a vertical drill press when working with a hand-drilling machine.

The object of the invention is to solve the drilling problem when the workpiece cannot be disassembled but requires a high drilling precision that is hard to achieve when working with hand drilling jigs.

The drilling process has an impact on product quality when drilling two pieces which need to be joined. In this case, it is necessary to drill perpendicular holes in order to fit correctly the screw or rivet head, otherwise the joints would be weak.

### BACKGROUND

The invention arose from the necessity to increase the quality of drilling operations. It is important to allow the person using drill positioners to have a clear view in order to ensure perpendicularity.

A notable advance came about with the use of vertical drill presses, that fixed work pieces using jaws or hydraulic jacks, allowing greater working security and holding the workpiece in the correct position.

In a further development, the rise of drilling jigs provided drill guidance by being fixed to the workpiece position in relation to the drilling machine, achieving a correct drilling performance.

### SUMARY OF THE INVENTION

The Drill Positioner should provide the highest precision possible and at the same time have a high deformation resistance. This ensures the drilling process is as accurate as possible according to the drill diameter and guarantees perpendicularity with the workpiece surface.

Under this premise the Drill Positioner will be made of metals with a high resistance to deformation, such as iron, steel, bronze and aluminium alloys. The drilling jig (4) is a different case. It can be made of iron but its hardness needs to be increased by metal treatments such us cementation, in order to achieve a longer life considering that the drilling jig is in contact with very hard tools such as drills, reamers or thread taps.

### BRIEF DESCRIPTION OF THE DRAWINGS

Figure 1. - Enlarged view of drilling jig components.
Figure 2. - Top view of the coupling tool components.

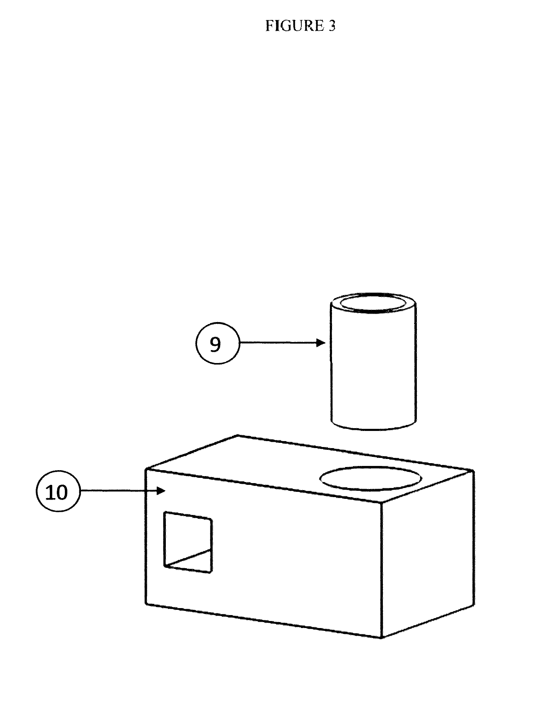

Figure 3. - Enlarged view of bush and level.
Figure 4. - Perspective view of the drill positioner.

### DRAWING REFERENCE NUMERALS

1) Handle.
2) Arm.
3) Spring.
4) Drilling jig.
5) Drilling jig thread tap.
6) Hand crank.
7) Jack.
8) Nut.
9) Bush.
10) Level.
11) Hand crank base.
12) Threaded rod.

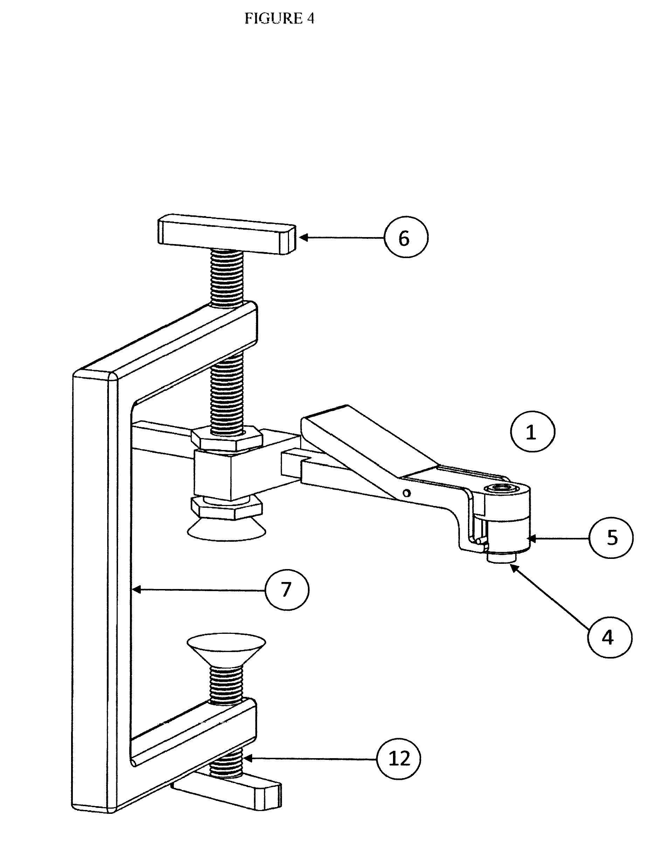

As depicted in figure 4 the Drill Positioner is made up of two different tools; the drilling jig fixing tool and the coupling tool.

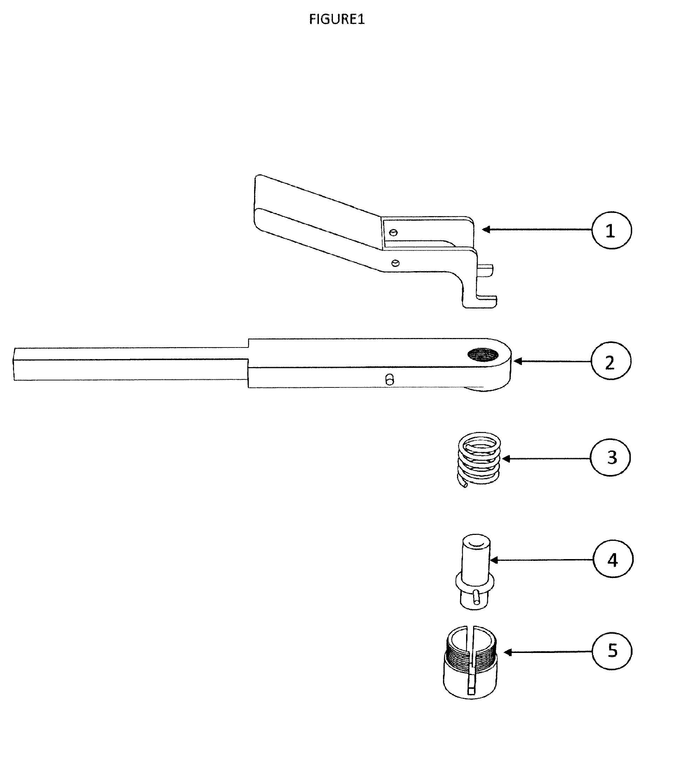

The drilling jig fixing tool, as depicted in figure 1, is made up of a handle (1), an arm (2), a spring (3), a drilling jig (4) and a drilling jig thread tap (5).

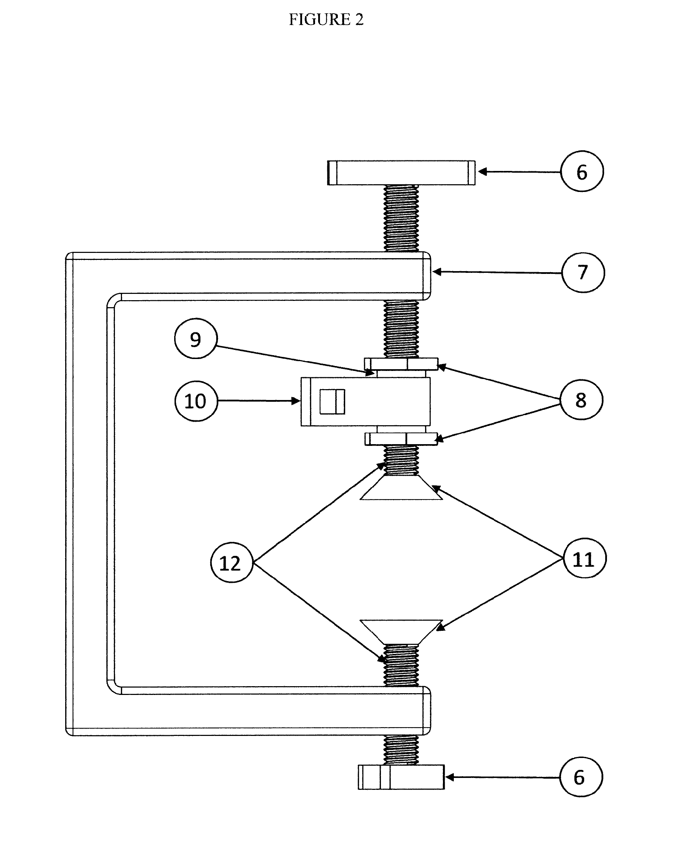

The coupling tool, as depicted in figure 2, is made up of two hand cranks (6), a U-shaped jack (7), two nuts (8), a bush (9), a level (10), two hand crank bases (11) and two threaded rods (12).

The coupling tool makes the fitting with the workpiece possible. As shown in the example in figure 2, it is a U-shaped tool but it also can be a suction cup with a threaded rod or a threaded rod with two nuts embracing the workpiece.

The fixing of the coupling tool shown in figure 2, is made by turning the hand cranks (6) until the workpiece is firmly attached between the two hand crank bases (11). Once the piece has been fixed in place, we will proceed to fix the drilling height using the bush (6) and the level (10), by tightening or loosening the nuts (8) until the right position is obtained.

It should, however, be noted that the level (10) can be rotated freely through 360 degrees around the threaded rod (12) even when the nuts (8) are tight. This is possible because the cylinder that is placed in the bush (9) is fixed with the nuts (8) because this cylinder is longer than the level (10).

Once the piece has been fixed with the coupling tool and the drilling height has been established, we insert the arm (2) of the drilling jig (4) coupling tool in the level (10) hole as shown in figure 4. The arm (4) moves longitudinally through the level (10) and at the same time it can be rotated 360 degrees around the threaded rod (12). The arm (2) fitting is square-shaped and the lower side of the square made in the level (10) is parallel to the hand crank base (11), so the arm (2) is also parallel to the hand crank base (11) and therefore is parallel to the workpiece surface where the hand crack base (11) is supported.

Assembly of the drilling jig fixing tool is carried out as shown in figure 1: the lower base of the drilling jig (4), understood by the lower base furthest from the spring (3), is pressed to the workpiece by the spring (3) making possible the coupling of the drilling surface with the lower base of the drilling jig (4). Both the drilling jig thread tap (5) and the drill of the arm (2) have larger holes than the drilling jig's (4) external diameter, so the coupling to the drilling jig's (4) lower base and the workpiece surface is possible even when the workpiece surface is not on the same plane of the coupling surface with the hand crank base (11). In other words, the spring (3) corrects the drilling jig (4) inclination until it achieves the coupling between the drilling jig's (4) lower surface and the workpiece surface.

If the surface is not flat, the lower part of the drilling jig 4) could be made with three protuberances, separated from the central point at the same distance and with 120 degrees of separation between them to achieve the coupling between the drilling jig (4) and a curved surface.

To help the drilling jig coupling tool displacement, the handle (1) releases the spring (3) pressure on the workpiece. The drilling jig (5) carries two rods on both sides as a guide and fixing elements for the drilling jig thread tap (5) and to prevent the drilling jig (4) turning, which can damage the surface.

A different mode of operation of the Drill Positioner is when the drilling jig (4) is separated from the workpiece. In this case, the workpiece has a flat surface and the hand crank base (11) where the bush (9) is located is supported on the drilling workpiece although the drilling workpiece is not supported on the lower base of the drilling jig (4). So the drilling can be done perpendicular to the surface on which the hand crank base (11) is supported, by drilling through the inside of the drilling jig (4).

The drilling jig thread tap (5) is a cylindrical piece with one threaded end and two longitudinal openings facing each other to hold the drilling jig (4) rods. The rods stop the drilling jig (4) rotating, prevent marks on the surface, and are the handle (1) supporting point to compress the spring (3).

The drilling jig thread tap (5) thread fixes the drilling jig (4) to the spring (3) and the arm (2).

The bush (9) is a cylinder that prevents the threaded rod (12) thread from being damaged during the drilling process. At the same time, the bush (9) allows the level (10) to slide allowing a rotation of 360 degrees around the bush (9).

The bush (9) is longer in length than the level (10) where it is located, in order to make the move of the level (10) possible when the nuts (8) are pressing against the bush (9).

The level (10) has a cylindrical hole where the bush (9) is located, and a square hole perpendicular to the first one that has the same size as the outside part of the arm (2). That makes the arm (2) displacement within the level (10) square hole possible.

## Claims

1. The Drill Positioner is a drilling mechanism that corrects the drilling jig position by the position of the drilling jig attachment surface and the workpiece surface and, at the same time, it allows the drilling operation on a 360-degree circular surface around the fixing point without varying the fixing point. It allows the drilling operation on a circular surface by the arm (2) displacement through a piece named level (10) that rotates around a threaded rod (12) by a bush (9) without changing the Drill Positioner's supporting point. The Drill Positioner is made up of two different tools: the drilling jig fixing tool and the coupling tool and consists of the following elements: a handle (1), an arm (2), a spring (3), a drilling jig (4) and a drilling jig thread tap (5) two hand cranks (6), a jack (7), two nuts (8), a bush (9), a level (10), two hand crank bases (11) and two threaded rods (12).

2. The Drill Positioner according to claim 1, **characterized by** a drilling jig coupling tool which is made up of an arm (2) with an extended square-shaped tip to fit it in the coupling tool and a threaded hole in the opposite tip to screw the drilling jig thread tap (5) in it.

3. The Drill Positioner according to claim 1, **characterized by** a drilling jig (4) to guide the drill, that it is hosted in a drilling jig thread tap (5). The drilling jig base is in contact with a spring (3) that it is set between the drilling jig (4) and the arm (2), and the drilling jig (4) external diameter is smaller than the drilling jig thread tap (5) diameter, so it allows the coupling between the drilling jig base (4) and the surface support.

4. The Drill Positioner according to claim 1, **characterized by** a drilling jig (4) that incorporates two rods on its sides, one in front of the other, to fit in the drilling jig thread tap (5) and prevent the drilling jig (4) from turning.

5. The Drill Positioner according to claim 1, **characterized by** a handle (1), which is fixed to the arm (2) with a pin. The handle (1) exerts force while being pressed onto the drilling jig (4) rods and releases the spring (3) pressure on the workpiece.

6. The Drill Positioner according to claim 4, **characterized by** a cylindrical drilling jig thread tap (5) with two longitudinal openings facing each other to hold the drilling jig (4) rods, and with one threaded end for fixing the drilling jig (4), the spring (3), and the arm (2).

7. The Drill Positioner according to claim 1, **characterized by** a coupling tool whose fixing systems are composed of a threaded rod (12) that finishes in a hand crank base (11) and is held in place by a U-shaped jack (7) which is drilled and threaded at both ends to hold the threaded rod (12). The threaded rod (12) can also be fixed on the workpiece by a suction cup.

8. The Drill Positioner according to claim 1, **characterized by** a bush (9) composed of a cylinder which is longer than the width of the level (10) where it is held, allowing a level (10) rotation of 360 degrees around the threaded rod (12) when the nuts (8) are pressing against the cylinder.

9. The Drill Positioner according to claim 1 and 8, **characterized by** a level (10) with a cylindrical hole where the bush (9) is held and that allows an arm (2) rotation of 360 degrees, and a square hole perpendicular to the cylindrical hole with the same size as the outside of the arm (2). This allows the arm (2) displacement through the inside of the level (10) square hole.

10. As stated in Claim 7, the Drill Positioner is **characterized by** two hand cranks (6) connected to two threaded rods (12). The two threaded rods (12) are, in turn, connected to the hand crank base (11).

11. The Drill Positioner according to claim 1, **characterized by** a drilling jig (4) vertical to the workpiece surface on which the hand crank base (11) is fixed, and where the level (10) is located even when the drilling workpiece is not supported on the base of the drilling jig.
